(19) Europäisches Patentamt
European Patent Office
Office européen des brevets

(11) Veröffentlichungsnummer: **0 199 101**
**A1**

# (12) EUROPÄISCHE PATENTANMELDUNG

(21) Anmeldenummer: **86103858.6**

(51) Int. Cl.[4]: **C12C 9/02**

(22) Anmeldetag: **21.03.86**

(30) Priorität: **12.04.85 DE 3513169**

(43) Veröffentlichungstag der Anmeldung:
**29.10.86 Patentblatt 86/44**

(84) Benannte Vertragsstaaten:
**AT BE CH DE FR GB IT LI LU NL SE**

(71) Anmelder: **Hopstabil**
**Hopfenverarbeitungs-Gesellschaft mbH**
**Ingolstädter Strasse 24**
**D-8069 Wolnzach(DE)**

(72) Erfinder: **Klüsters, Paul, Dipl.-Ing.**
**Grabengasse 10**
**D-8068 Paffenhofen a.d. Ilm(DE)**

(74) Vertreter: **Eitle, Werner, Dipl.-Ing. et al**
**Hoffmann, Eitle & Partner Patentanwälte**
**Arabellastrasse 4**
**D-8000 München 81(DE)**

## (54) Verfahren zur Herstellung von Isohumulonen und Verwendung derselben.

(57) Es wird ein Verfahren zur Herstellung von Isohumulonen aus einem Hopfenextrakt beschrieben, wonach der Hopfenextrakt im Verhältnis 1:2 bis 1:50 mit wässriger Lösung unter Rühren bei erhöhter Temperatur unter Erhalt eines Zwei-Phasen-Systems vermischt, die wässrige Phase abgetrennt und aus dieser durch Zugabe eines Erdalkalisalzes die Humulone ausgefällt werden; daran schliesst sich eine Isomerisierung der Erdalkali-Humulate zu den entsprechenden Erdalkali-Isohumulaten und gegebenenfalls Umwandlung der letzteren zu den freien Isohumulonen an. Die erhaltenen freien Isohumulone werden zum Bittern von Bier oder der Würze verwendet.

EP 0 199 101 A1

Verfahren zur Herstellung von Isohumulonen und Verwendung derselben

Die Erfindung betrifft ein Verfahren zur Herstellung von Isohumulonen (Iso-alpha-Säuren) aus einem Hopfenextrakt, der durch Extraktion von Hopfen mit überkritischem $CO_2$ gewonnen wurde; durch Abtrennen der Humulone aus dem genannten Extrakt und anschliessende Isomerisierung der Humulone als Erdalkali-Humulate, sowie die Verwendung dieser Isohumulone.

Die Bitterstoffe des Hopfens, die dem Bier in der Hauptsache die gewünschte Bittere vermitteln, sind zwei Arten von Bittersäuren, die alpha-Säuren (Humulone) und die β-Säuren (Lupulone) sowie die aus den Humulonen durch Isomerisierung gebildeten Isohumulone (Iso-alpha-Säuren). Die alpha-Säuren haben einen hohen Bitterwert, die β-Säuren dagegen gewinnen erst bei der Oxidation in die Weichharzstufe oder beim oxidativen Abbau ihre bitternde Wirkung.

Unter der Bezeichnung "Humulone" sind die im Hopfen als Bitterstoffe enthaltenen Humulone der folgenden Zusammensetzung zu verstehen:

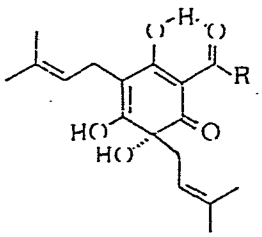

| | |
|---|---|
| R = $CH_2CH(CH_3)_2$: | Humulon |
| R = $CH(CH_3)$: | Cohumulon |
| R = $CH(CH_3)CH_2CH_3$: | Adhumulon |
| R = $CH_2CH_2CH(CH_3)_2$: | Prähumulon |
| R = $CH_2CH_3$: | Posthumulon |

Beim Erwärmen, z.B. beim Hopfenkochen, erfahren die vorstehend angegebenen Humulone eine Isomerisierung zu den sogenannten Iso-alpha-Säuren, e.g. Cis-und Trans-Isohumulon, die den nachstehend angegebenen Formeln entsprechen:

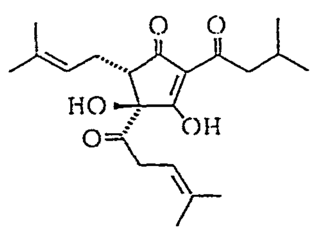

Cis-Isohumulon

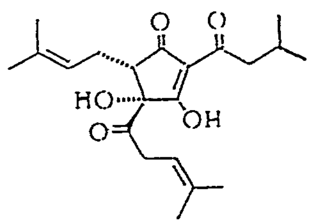

Trans-Isohumulon

Weitere Isomerisierungsprodukte bilden die Cis-und Trans-Allo-Isohumulone, Abeo-Isohumulone (oxidierte Isohumulone), Anti-Isohumulone, Spiro-Isohumulone, Humelinsäuren und verschiedene Homologe, wie sie z.B. von M. Verzele: The Chemistry of Hops in "Brewing Science", Herausgeber J.R.A. Pollock, Academic Press, London-New York, 1981, Seiten 279-332, beschrieben werden.

Man hat festgestellt, dass sich beim Kochen des Bieres nur etwa 30% der Humulone in die gewünschten Isohumulone umwandeln; 70% der Humulone werden durch Nebenreaktionen abgebaut bzw. absorbiert. Um den Anteil der wertvollen Isohumulone möglichst hoch zu halten, hat man verschiedene Verfahren entwickelt, wonach man die Humulone vorab isomerisiert und die dabei erhaltenen Isohumulone dem Bier erst in einer relativ späten Herstellungsphase zugibt. Die Entwicklung entsprechender Verfahren erfolgte

grundsätzlich in zwei Richtungen, nämlich

(a) erst Isomerisieren, dann Trennen, oder

(b) erst Trennen, dann Isomerisieren.

Bei der Verfahrensvariante gemäss (a) erfolgt zunächst, ausgehend vom Hopfenextrakt, der Humulone, Lupulone, Hopfenöle, Lipide und Wachse sowie Hartharze enthält, eine Isomerisierung der Humulone durch Kochen in alkalischem Medium bei einem pH-Wert von ca. 12 zu den entsprechenden Isohumulaten, i.e. Kalium-und/oder Natrium-Isohumulaten. Bei diesem alkalischen Kochprozess entstehen zusätzlich auch die entsprechenden Kalium-Natrium-Hartharzsalze.

Aus dem so erhaltenen Isohumulat/Lupulatgemisch wird das Lupulat z.B. durch Absenken des pH-Wertes aus etwa 9,0 ausgefällt, während die Kalium/Natrium-Isohumulate bei diesem pH-Wert als Salze in der wässrigen Lösung vorliegen. Die ausgefällten Lupulate werden dem Bierkochprozess zugeführt, während die Kalium/Natrium-Isohumulate in wässriger Lösung verbleiben und in dieser Form für die Zugabe in das fertige Bier vor dem Filtrationsprozess zur Verfügung stehen.

Nach einer weiteren Verfahrensvariante gemäss (a) kann die Auftrennung der Komponenten nach dem Kochen des Extraktes im alkalischen Medium auch durch eine Zwei-Phasen-Trennung in Hexan/Wasser erfolgen, wobei man durch Säurezugabe das Gemisch auf einen pH von 7,0 einstellt. Dabei erhält man freie Isohumulone, die in die wässrige Lösung gehen, während die Lupulone im Hexan gelöst sind. Zur Gewinnung der Lupulone muss das Hexan abgedampft werden. Diese Hexanabtrennung erfolgt in der Regel nicht quantitativ, was einen Nachteil dieses Verfahrens darstellt. Ein weiterer Nachteil des vorstehend beschriebenen Verfahrens liegt darin, dass bei der Zwei-Phasen-Trennung die Hartharze ebenso wie die Isohumulone in die wässrige Phase übergehen und auf diese Weise zusammen mit den Isohumulonen ins Bier gelangen. Dies ist jedoch unerwünscht, da die Hartharze unedel bitter sind.

Bei der Verfahrensvariante (b) erfolgt zunächst eine Abtrennung der Humulone von den Lupulonen. Dies geschieht entweder durch eine Zwei-Phasen-Trennung mit dem System Hexan/Methanol + Wasser. Bei dieser Zwei-Phase-Trennung gehen die Humulone in das Hexan über, während die Lupulone in Methanol + Wasser in Lösung gehen. Diese Zwei-Phasen-Trennung arbeitet bevorzugt bei einem pH-Wert von ca. 5.

Nach einer anderen Variante erfolgt die Abtrennung der Humulone mit Hilfe eines Polypropylengranulates, welches in dichter Packung eine grosse Oberfläche ergibt. An den Körnchen dieses Kunststoffes lagert sich der gesamte Extrakt an. Anschliessend spült man das Granulat mit den angelagerten Harzen mit einer wässrig-alkalischen Lösung, wobei die Humulone in die wässrige Lösung übergehen, während die Lupulone am Kunststoffgranulat haften bleiben.

An die vorstehende Abtrennung der Humulone kann sich gemäss Verfahrensvariante (b) eine beliebige Isomerisierung anschliessen. Wahlweise können z.B. folgende Isomerisierungsreaktionen durchgeführt werden:

Durch Kochen in alkalischer Lösung isomerisieren die Humulone zu den entsprechenden Kalium/Natrium-Isohumulaten, wobei zahlreiche und spezifische Nebenprodukte gebildet werden.

Ausserdem kann die Isomerisierung auch durch Behandeln der Erdalkali-Humulate bei erhöhter Temperatur erfolgen. Durch Zugabe von Magnesium-oder Calciumsalzen zu den Kalium/Natrium-Humulaten erhält man die unlöslichen Magnesium/Calcium-Humulate, die aus der wässrigen Lösung ausfallen. Nach Abtrennen dieser Magnesium/Calcium-Humulate werden diese einer Isomerisierungsreaktion bei einer Temperatur von ca. 105°C unterzogen. Dabei erhält man die reinsten Isohumulate, da unerwünschte Nebenreaktion weniger ausgeprägt sind. Wegen der schlechten Löslichkeit der Magnesium-Isohumulate werden diese bevorzugt mit Natrium-polyphosphat als Lösungsvermittler behandelt, wobei Natrium-Isohumulate entstehen.

Während bei der Verfahrensvariante gemäss (b) unerwünschte Nebenprodukte in geringerem Masse anfallen, ist es bei dieser Variante z.B. nachteilig, dass das bei der Humulonabtrennung verwendete Hexan durch Verdampfen nicht quantitativ entfernt werden kann, so dass immer noch kleine Bestandteile beim Humulon verbleiben, die für das Bier unerwünscht sind. Bei Verwendung von Polypropylengranulat zur Abtrennung des Humulons tritt dieser Nachteil nicht auf, dafür aber verbleiben nach dem den entsprechenden Kunststoffkörpern. Diese müssen durch Behandlung mit Methanol/ Wasser von dem Granulat abgelöst werden, wobei das Verfahren weiter kompliziert wird.

Aufgabe der vorliegenden Erfindung ist es, ein Verfahren zur Verfügung zu stellen, bei welchem die Nachteile der bekannten Verfahren vermieden werden und wobei insbesondere eine hohe Ausbeute an Isohumulonen erhalten wird, indem unerwünschte Nebenreaktionen vermieden werden,

die Anwendung von organischen Lösungsmitteln oder anderen Lösungsvermittlern nicht erforderlich ist und der Einsatz von Kunststoffen vermieden wird.

Die vorstehende Aufgabe wird mit Hilfe des eingangs beschriebenen Verfahrens gelöst, das durch die folgenden Verfahrensschritte gekennzeichnet ist:

(a) Mischen des Hopfenextraktes im Verhältnis 1:2 bis 1:50, vorzugsweise 1:2 bis 1:20, mit wässriger Lösung unter Rühren bei erhöhter Temperatur unter Erhalt eines Zwei-Phasen-Systems, wobei die quasi-ölige Phase die gelösten Hopfenöle, Lupulone, ungelösten Humulone, Fette und Wachse, die quasi-wässrige Phase die gelösten Humulone enthält.

(b) Abtrennen der wässrigen Phase,

(c) Ausfällen und Abtrennen der Humulone aus der wässrigen Phase durch Zugabe eines Erdalkalisalzes,

(d) gegebenenfalls Rezyklisierung des in Schritt (c) erhaltenen Filtrates in einen neuen Auftrennungsschritt,

(e) Isomerisierung der als dünne Schicht von pastöser Konsistenz vorliegenden Erdalkalihumulate bei erhöhter Temperatur und einer Feuchte von 90 bis 98% während eines Zeitintervalles von 5 min. bis 6 h zu den entsprechenden Erdalkali-Isohumulaten, und

(f) gegebenenfalls Umwandlung der Erdalkali-Isohumulate zu den entsprechenden freien Isohumulonen.

Es ist vorteilhaft, bei dem erfindungsgemässen Verfahren von einem Hopfenextrakt auszugehen, der mit $CO_2$, vorzugsweise überkritischem $CO_2$ gewonnen wurde. Dieser Extrakt ist bekanntlich weitgehend frei an Hartharzen. Damit treten die in Zusammenhang mit dem sogenannten "Gushing" - (wildes Schäumen) beobachteten Probleme nicht auf. Prinzipiell kann aber jeder beliebige Hopfenextrakt als Ausgangsmaterial für das erfindungsgemässe Verfahren eingesetzt werden, wobei es bevorzugt ist, Hartharze aus der wässrigen Isohumulat-Phase abzutrennen.

Nach dem erfindungsgemässen Verfahren erfolgt zunächst eine Abtrennung der Humulone aus dem Hopfenextrakt. Durch Vermischen des Hopfenextraktes mit wässriger Lösung im Verhältnis 1:2 bis 1:50, vorzugsweise 1:2 bis 1:20 und besonders bevorzugt 1:3 bis 1:6, wird ein Zwei-Phasen-System erhalten, wobei eine quasi-ölige Phase die Hopfenöle, Lupulone, ungelösten Humulone, Lipide und Wachse enthält, während die quasi-wässrige Phase die gelösten Humulone aufweist.

Die vorstehend genannte quasi-ölige Phase ist in der Regel die obere Phase, kann aber in Ausnahmefällen auch die untere Phase darstellen. Die quasi-wässrige Phase ist in der Regel die untere Phase.

Man geht beim Vermischen des Hopfenextraktes mit wässriger Lösung bevorzugt so vor, dass man den Hopfenkextrakt mit der entsprechenden Wassermenge überlagert und in einem an einen Thermostaten anschliessbaren Versuchsbehälter aufheizt. Dabei schwimmen die Hopfenöle an die Oberfläche auf. Der Versuchsbehälter ist bevorzugt mit einem Rührwerk versehen, mit welchem man das Extrakt/Wasser-Gemisch rührt, wobei sich eine Emulsion bildet und die Viskosität des Harzextraktes stark absinkt und in die Grössenordnung von Wasser kommt. Die Tröpfchengrösse der Emulsion liegt unter 1 mm. Man lässt die Emulsion nach Abschalten des Rührwerkes einige Zeit stehen, wobei eine Auftrennung in zwei Phasen erfolgt. Während des Rührvorganges geht der Hauptanteil der Humulone als Alkali-Humulat in die wässrige Phase über. Nach dem Absitzen der Emulsion bildet sich über der wässrigen Alkali-Humulat-Lösung eine entsprechende Schicht aus Lupulon, ungelöstem Humulon, Harzölen, etc., die etwa 1/5 der Gesamthöhe des Gemisches ausmacht.

Die in Schritt (a) verwendete wässrige Lösung stellt eine wässrige Lösung dar, die Alkaliionen enthält und auf einen alkalischen pH eingestellt ist.

Es ist bevorzugt, bei der Zwei-Phasen-Trennung gemäss Schritt (a) pH-Wert der zugegebenen wässrigen Lösung auf ca. 9 einzustellen. Die pH-Einstellung erfolgt dabei durch Zugabe eines Alkalisalzes, wie z.B. $K_2CO_3$, $Na_2CO_3$, KOH, NaOH. Besonders bevorzugt ist der Einsatz von $K_2CO_3$.

Es ist bevorzugt, dass die in Schritt (a) verwendete wässrige Lösung eine erhöhte Konzentratin an Alkaliionen aufweist. Aus diesem Grunde gibt man dem verwendeten Wasser neben dem Alkalisalz, wie vorzugsweise $K_2CO_3$, noch Kaliumacetat zu.

Die Zwei-Phasen-Trennung gemäss Schritt (a) wird bei erhöhter Temperatur durchgeführt, vorzugsweise bei einer Temperatur von 30 bis 80°C, besonders bevorzugt bei 30 bis 35°C.

Bei der Zwei-Phasen-Trennung gemäss Schritt (a) wird das wässrig/ölige Gemisch gerührt, bevorzugt mit einer Rührgeschwindigkeit von ca. 1.000 UpM. Es kann dabei jede Art von Rührer eingesetzt

werden, bevorzugt ist die Verwendung eines Propellerrührers. Der Rührvorgang erfolgt über einen Zeitintervall von 3 bis 30 min., vorzugsweise von ca. 5 min..

Nach dem Rührvorgang wird das Rührwerk abgeschaltet und das Gemisch zur Auftrennung ca. 15 min. stehen gelassen.

Daraufhin wird die wässrige Phase abgetrennt. Durch Zugabe eines Erdalkalisalzes werden die Humulone aus der wässrigen Phase ausgefällt. Es können zur Ausfällung Magnesium-oder Calciumsalze zugegeben werden. Bevorzugt ist die Zugabe von Magnesiumsalzen, insbesondere von $MgCl_2$.

Um eine möglichst quantitative Gewinnung der Humulone zu erzielen, wird das bei der Ausfällung der Erdalkali-Humulone erhaltene Filtrat zur weiteren Auftrennung rezyklisiert. Es ist bevorzugt, dieses Filtrat durch Zugabe von $K_2CO_3$ auf einen pH-Wert von 8,5 einzustellen und der öligen Phase, wie sie im Schritt (a) erhalten wird, zuzugeben. Auch hier ist es bevorzugt, das Verhältnis Hopfenextrakt zu wässriger Lösung auf ca. 1:3 bis 1:6, vorzugsweise auf 1:4, einzustellen.

Dieser Rezyklisierungsschritt wird mehrere Male, bevorzugt dreimal wiederholt. Diese Rezyklisierungsschritte werden im folgenden als Rezyklisierungsstufen 2 bis 4 bezeichnet. In den Rezyklisierungsstufen 2 bis 4 erfolgt zur optimalen Gewinnung der Humulone jeweils eine spezielle Einstellung von pH-Wert, Temperatur und Rührzeit.

Es ist bevorzugt, in den Rezyklisierungsstufen den pH-Wert entsprechend der nachfolgenden Tabelle, i.e. auf 8,5, 8,0 und 7,5 einzustellen.

Ebenso wird die Rührzeit in den verschiedenen Rezyklisierungsstufen entsprechend den Angaben in der nachfolgenden Tabelle, d.h. von 5 min. bis 30 min. variiert. Die Temperatur in diesen Rezyklisierungsstufen variiert dabei zwischen 55 und 50°C.

Die vorstehend angebene Manipulation im Hinblick auf pH-Wert, Rührzeit und Temperatur erfolgt, um die Auflösung von Lupulonen zu vermeiden, gleichzeitig aber eine ausreichende Humulon-Löslichkeit zu erhalten. In der nachfolgenden Tabelle ist das vierstufige Verfahren zusammengestellt.

Tabelle

| Stufe | pH-Wert | Rührzeit (Reaktionszeit | Zeit zum Absetzen (Verweilzeit v.d. Kalium-Humulat-Abtrennung | Temperatur (°C) | Humulon-Restgehalt (%) |
|---|---|---|---|---|---|
| 1 (Auftrennungsstufe) | 9,0 | 5 min. | 15 min. | 60 | ca. 28 |
| 2 (1.Rezyklisierung) | 8,5 | 5 min. | 15 min. | 55 | 16 |
| 3 (2.Rezyklisierung) | 8,0 | 30 min. | 15 min. | 50 | 6 |
| 4 (3.Rezyklisierung) | 7,5 | 30 min. | 15 min. | 50 | kleiner 1 |

Aus der vorstehenden Tabelle ist deutlich ersichtlich, dass mit Hilfe des erfindungsgemässen Verfahrens die Humulone nahezu quantitativ aus dem Hopfenextrakt abgetrennt werden können. Der Restgehalt nach Durchgeführung der dritten Rezyklisierung beträgt weniger als 1%.

Die mit Erdalkalisalzen gefällten Erdalkali-Humulate, bevorzugt Mg-Humulate, müssen anschliessend einer Isomerisierungsreaktion unterzogen werden. Diese Isomerisierungsreaktion wird z.B. wie folgt durchgeführt:

Die Erdalkali-Humulate, bevorzugt Magnesium-Humulate, werden als Masse von pastöser bzw.

hochviskoser Konsistenz einer Temperaturbehandlung bei ca. 105°C unterworfen. Dazu ist es vorteilhaft, die pastöse Masse von Magnesium-Humulaten als dünne Schicht auf eine entsprechende Platte oder Blech aufzutragen, vorzugsweise auf ein V2A-Blech. Bei der Temperaturbehandlung ist es erforderlich, dass eine relativ hohe Umgebungs-Feuchtigkeit herrscht. Bevorzugt ist eine Feuchte von 90 bis 98%, besonders bevorzugt von 95%.

Die Temperaturbehandlung erfolgt über einen Zeitraum von 1 bis 6 h. Im allgemeinen ist es ausreichend, die Magnesium-Humulate 2 h lang bei der angegebenen Temperatur und einer Feuchte von 95% $H_2O$ zu behandeln. Die bei dieser Temperaturbehandlung erhaltenen Magnesium-Isohumulate stellen ein Produkt dar, das bereits in dieser Form im Handel vertrieben werden kann.

Nach einer weiteren Ausführungsform gemäss der Erfindung erfolgt die Isomerisierungsreaktion unter Einwirkung von Mikrowellenbestrahlung. Bisher wurden Untersuchungen zur Einwirkung von Mirkowellen zur Auslögung einer Isomerisierungsreaktion nur in seltenen Fällen durchgeführt. Besonders beim Kochen mit Mirkowellen im Haushalt ist es von Interesse, dass die in den Speisen enthaltenen Komponenten keine unerwünschten Isomerisierungsreaktionen erfahren. So konnte z.B. bei einer von Mai J., Tsai C.H., Armbruster G., Chu.P. und Kinsella J.E. in J. Food Sci. 45 (6) 1980, S. 1753-1755, veröffentlichen Untersuchung festgestellt werden, dass ungesättigte Fettsäuren bei Einwirkung von Mikrowellen keine Isomerisierung erleiden.

Umso überraschender war für die Anmelderin die Feststellung, dass bei Einwirkung von Mikrowellen auf Erdalkalihumulate in erstaunlich kurzer Zeit eine Isomerisierung zu den entsprechenden Isohumulaten erfolgt war.

Dabei ist es bevorzugt, die Humulate, die als feuchte, pastöse Masse vorliegen, als dünne Schicht von ca. 0,1 bis 2 cm auf ein Blech etc. aufzutragen. Die Feuchtigkeit der pastösen Masse beträgt 90 bis 98%, bevorzugt 95 % Feuchte.

Für die Durchführung der Versuche wurde ein handelsüblicher Mikrowellenherd für Haushalte mit einer Leistung von 800 Watt verwendet. Die Einwirkungszeit betrug 2 bis 15 min., wobei bereits nach 5 min. eine weitgehend quantitative Isomerisierung zu Isohumulaten festgestellt werden konnte. Die Temperatur der pastösen Masse lag dabei im Bereich von 95 bis 110°C, vorzugsweise bei 100°C.

Die vorstehend beschriebene Ausführungsform der Isomerisierungsreaktion unter Einwirkung von Mikrowellen führt zu einer wesentlichen Vereinfachung und qualitativen Verbesserung des erfindungsgemässen Verfahrens.

Da die Löslichkeit von Magnesium-Isohumulaten relativ schlecht ist, ist man im folgenden bestrebt, das Magnesium zu entfernen und die freien Isohumulonsäuren herzustellen.

Gemäss der Erfindung wird diese Verfahrensstufe wie folgt durchgeführt:

Man stellt zunächst eine etwa 10%ige Magnesium-Isohumulat-Lösung in Alkohol, bevorzugt Ethanol, her und säuert diese auf einen pH-Wert von ca. 2 bis 6, bevorzugt 4, an. Zum Ansäuren eignen sich insbesonder Oxalsäure, Salzsäure sowie $CO_2$. Durch die pH-Verschiebung auf einen sauren pH-Wert entstehen die freien Isohumulonsäuren. Zur Entfernung der sich in dem Gemisch befindlichen Salze führt man eine Umkehrosmose durch, wobei man Isohumulon mit einem gewissen Rest-Ethanol-Gehalt erhält. Ethanol + Salze + überschüssige Säure werden aus dem gewünschten Gemisch abgetrennt.

Auf diese Weise erhält man als Endprodukt ein ca. 60%iges Isohumulon. Als Verkaufsprodukt eignet sich inbesondere ein etwa 30%iges Isohumulon, wobei der Rest Ethanol darstellt.

Um die bakteriostatische Wirkung der freien Isohumulone und deren biologische Beständigkeit zu sichern, werden die Isohumulone bevorzugt als mindestesn 10 bis 20%ige enthanolische Lösung gelagert und vertrieben.

Nach einer weiteren Variaten ist es auch möglich, die Umwandlung der Erdalkali-Isohumulate, bevorzugt Magnesium-Isohumulat, in die entsprechenden freien Isohumulone gemäss Schritt (f) mit Hilfe eines stark sauren Kationenaustauschharzes durchzuführen. Dazu werden die in Schritt (e) erhaltenen Isohumulate in einem Alkohol aufgelöst und entweder über eine entsprechende Säule mit makroporösem, stark saurem Kationenaustauschharz geleitet, oder mit einer adequaten Menge an Kationenaustauschharz in Kontakt gebracht.

Bisher erfolgte die Zudosierung der Humulate zum unfiltrierten oder filtrierten Bier in Form ihrer Alkalisalze. Dabei müssen diese auf einen Isohumulongehalt von 0,5 bis 1 % verdünnt werden. Der pH-Wert dieser wässrigen Lösungen wird im alkalischen Bereich auf 8 bis 9 eingestellt. Dabei treten häufig unerwünschte Nebeneffekte auf, wie z.B. die Neigung zur verstärkten Biertrübung, das Auftreten von Off-flavor und Gushing (wildes Schäumen).

Um diese unerwünschten Nebeneffekte zu vermeiden und eine hohe Qualität der Bierbittere durch eine erhöhte Ausbeute der zugegebenen alpha-Isohumulone zu erzielen, ist gemäss der Erfindung eine Zudosierung der freien Isohumulone sowohl zum Bier als auch zur Würze vorgesehen. Dabei können die Isohumulone in höheren Konzentrationen zugegeben werden, wobei eine starke Verdünnung des Bieres bzw. der Würze vermieden wird. Von besonderer Bedeutung ist dabei auch, dass bei Zugabe der erfindungsgemäss hergestellten freien Isohumulone keine Verwendung von bierfremden Chemikalien als Lösungsvermittlern erforderlich ist. Sofern Lösungsvermittler eingesetzt werden, stellen diese natürliche Substanzen dar, wie insbesonder Ethanol, Glucose, Isoglucose, Fructose, Kornsirupsolids, Dextrine oder deren Gemische. In Abhängigkeit der vewendeten Lösungsvermittler bzw. Trägersubstanzen kann das dem Bier zugegebene, isohumulonhaltige Produkt flüssig bis hochviskos sein. Der pH-Bereich desselben liegt dabei im Sauren, bevorzugt bei pH 3 bis 6, besonders bevorzugt bei pH 4.

Gemäss der Erfindung werden die freien Isohumulone dem Bier oder der Würze unter Lösungsvermittlung geeigneter Lösungsvermittler in hoch konzentrierter Form von mindestens 10 % Isohumulon, bezogen auf den Lösungsvermittler, zugegeben. Im allgemeinen ist es bevorzugt, das die Isohumulone in einer Konzentration von 10 bis 30 % und darüber vorliegen. Dabei ist es bevorzugt, die Isohumulone zusammen mit den Lösungsvermittlern, z.B. als ethanolische Lösung, in konstantem Fluss dem Bier während des Umpumpens zuzugeben. Trotz der verhältnismässig geringen Löslichkeit der Iso-alpha-Säuren in Bier - (ca. 60 bis 80 mg/l) treten dabei keine Ausfällungen auf. Vielmehr konnte der gesamte Gehalt an zugegebenen Iso-alpha-Säuren im filtrierten Bier nachgewiesen werden.

Nach einer anderen Ausführungsform wird ein Isohumulon/Glucosesirup-Gemisch, bevorzugt in 10%iger Isohumulon-Konzentration, entweder in einem Lagertank vorgelegt oder der Würze zugegeben. Besonders geeignet ist die Dosierung des Iso-alpha-Säuren/Glucose-Gemisches zur Heisswürze, wobei auf diese Art eine Verbesserung der Ausbeute an Isohumulon im Vergleich zur konventionellen Hopfung erreichbar ist. Die Zugabe erfolgt dabei vorzugsweise 5 bis 10 min. vor Kochende.

Nach einer weiteren Ausführungsform wird das hochviskose Gemisch aus Isohumulonen und Glucose (10 %/ 90%) auf ein Metallnetz gegeben, welches kurz vor Kochende in den Dampfraum der Sudpfanne gebracht wird. Dabei wird das vorstehend genannte Gemisch sofort dünnflüssig und tropft in die Würze, in der es sich sofort auflöst.

Im folgenden wird die Erfindung anhand von Beispielen näher erläutert, die jedoch nicht beschränkend sein sollen.

Beispiel 1

In einer Pilotanlage wurden 5 kg eines durch Extraktion mittels überkritischem $CO_2$ erhaltenen Harzes mit 20 l wässrige $K_2CO_3$-Lösung, entsprechend einem bevorzugten Verhältnis von 1:4, überlagert un der an einen Thermostaten anschliessbare Versuchsbehälter auf 60°C aufgeheizt. Das Hopfenöl schwamm dabei an die Oberfläche auf. Der Versuchsbehälter war mit einem Rührwerk versehen und die auf 60C erhitzten Komponenten wurden ca. 5 min. gerührt. Dafür wurde ein Propellerrührer mit einer Umdrehungsgeschwindigkeit von 1.000 UpM verwendet. Es bildete sich eine Emulsion, wobei die Viskosität des Harzextraktes stark absank und etwa in der Grössenordnung von Wasser lag. Die Tröpfchengrösse betrug dabei weniger als 1 mm.

Das Gemisch wurde nach ABschalten des Rührwerkes 15 Minuten bei 60°C stehen gelassen. Während des Rührvorganges ging das Humulon zu einem erheblichen Teil als Humulat in die wässrige Phase über.

Durch die vorstehende Behandlung waren die Humulone in Kaliumhumulate übergegangen. Im Ruhezustand bildete sich über der wässrigen Kaliumhumulat-Lösung eine entsprechende Schicht aus Lupulon, ungelöstem Humulon und Harzöl aus, die etwa 1/5 der Gesamthöhe des Behälters einnahm.

Nach einer Wartezeit von ca. 15 min. wurde die untere, wässrige Phase, die das Kaliumhumulat enthielt, aus dem Behälter abgezogen und durch Fällung mit $MgCl_2$ das Magnesiumhumulat aus der wässrigen Phase ausgefällt. Das so erhaltene Magnesiumhumulat wurde abfiltriert.

Das dabei erhaltene Filtrat wurde durch Zugabe von $K_2CO_3$ auf pH 8,5 eingestellt und in die Stufe (a) des Verfahrens rezyklisiert, wie dies vorstehend beschrieben ist.

Das mit $MgCl_2$ gefällte Magnesiumhumulat wurde im folgenden einer Isomerisierungsreaktion unterzogen. Dazu wurde Magnesiumhumulat als dünner, ca. 2 cm dicker Filterkuchen auf ein V2A-Blech aufgetragen und bei einer relativen Feuchte von über 95% $H_2O$ und einer Temperatur von 105°C ca. 2 h behandelt. Dabei erhält man eine Umwandlung in Magnesium-Isohumulat. Dieses stellt ein verkaufsfähiges Produkt dar. Aufgrund der schlechten Löslichkeit des Magnesium-Isohumulats ist es bevorzugt, die freie Isohumulonsäure herzustellen. Dazu wurde eine etw 10%ige Magnesium-Isohumulat-Lösung in Ethanol hergestellt und diese mit Hilfe von Oxalsäure auf pH 4 gebracht. Anschliessend wurde diese Lösung mittels Umkehros-

mose in Isohumulon mit einem gewissen Rest-Ethanol-Gehalt und Ethanol-plus-Säure getrennt. Als Endprodukt erhielt man auf diese Weise etwa 60% Isohumulon.

Beispiel 2

Nach einer weiteren Alternative wurde das MagnesiumIsohumulat mit Hilfe eins makroporösen, stark sauren Kationenaustauschharzes in das freie Isohumulon umgewandelt. Hierzu wurde das Austauschharz Levatit von der Firma Bayer, Leverkusen, eingesetzt. Das Harz befand sich in vier hintereinandergeschalteten Säulen mit einem Durchmesser von jeweils 15 cm und einer Höhe von ca. 80 cm. In kontinuierlicher Betriebsweise wurde eine ca. 10%ige ethanolische Lösung von Magnesium-Isohumulat über die Säulen geleitet. Das Magnesium-Ion wird dabei am Austauschharz fixiert, während das freie Isohumulon die Säulen passiert.

Sobald bei der kontinuierlichen Betriebsweise die erste Säule an Magnesium-Ionen gesättigt war, was sich durch einen entsprechenden Leitwert anzeigte, wurde diese Säule entfernt und am Ende der Säulenreihe eine neue Säule dazugeschaltet. Die entfernte erste Säule wurde zwischenzeitlich regeneriert.

Das genannte Verfahren arbeitete mit einem Durchsatz von mindestens 100 l methanolischer Lösung pro h. Aus der erhaltenen Isohumulon-Lösung wurde Ethanol abgedampft bis zum Erhalt einer etwa 30%igen ethanolischen Isohumulon-Lösung.

**Ansprüche**

1. Verfahren zur Herstellung von Isohumulonen aus einem Hopfenextrakt, der durch Extraktion von Hopfen mit $CO_2$ gewonnen wurde; durch Abtrennen der Humulone aus dem genannten Extrakt und anschliessender Isomerisierung der Humulone als Erdalkali-Humulate, **gekennzeichnet** durch die folgenden Verfahrensschritte:

(a) Mischen des Hopfenextraktes im Verhältnis 1:2 bis 1:50, vorzugsweise 1:20, mit wässriger Lösung unter Rühren bei erhöhter Temperatur unter Erhalt eines Zwei-Phasen-Systems, wobei die quasi-ölige Phase die gelösten Hopfenöle, Lupulone, ungelösten Humulone, Fette und Wachse, die quasi-wässrige Phase die gelösten Humulone enthält,

(b) Abtrennen der wässrigen Phase,

(c) Ausfällen und Abtrennen der Humulone aus der wässrigen Phase durch Zugabe eines Erdalkalisalzes,

(d) gegebenenfalls Rezyklisierung des in Schritt (c) erhaltenen Filtrates in einen neuen Auftrennungsschritt,

(e) Isomerisierung der als dünne Schicht von pastöser Konsistenz vorliegenden Erdalkalihumulate bei erhöhter Temperatur und einer Feuchte von 90 bis 98% während eines Zeitintervalles von 5 min. bis 6 h zu den entsprechenden Erdalkali-Isohumulaten, und

(f) gegebenenfalls Umwandlung der Erdalkali-Isohumulaten zu den entsprechenden freien Isohumulonen.

2. Verfahren gemäss Anspruch 1, dadurch **gekennzeichnet**, dass im Schritt (a) das Verhältnis Hopfenextrakt : wässrige Lösung 1:3 bis 1:6, vorzugsweise 1:4, beträgt.

3. Verfahren gemäss Ansprüchen 1 bis 2, dadurch **gekennzeichnet**, dass die wässrige Lösung in Schritt (a) auf einen pH-Wert von ca. 9 eingestellt ist.

4. Verfahren gemäss Anspruch 3, dadurch **gekennzeichnet**, dass die pH-Einstellung durch Zugabe eines Alkalisalzes, insbesondere $K_2CO_3$, erfolgt.

5. Verfahren gemäss den Ansprüchen 1 bis 4, dadurch **gekennzeichnet**, dass Schritt (a) bei einer Temperatur von 30 bis 35°C durchgeführt wird.

6. Verfahren gemäss Anspruch 5, dadurch **gekennzeichnet**, dass Schritt (a) bei einer Temperatur von 60°C durchgeführt wird.

7. Verfahren gemäss Anspruch 6, dadurch **gekennzeichnet**, dass der Rührvorgang für einen Zeitintervall von 3 bis 30 min. bevorzugt unter Verwendung eines Propellerrührers durchgeführt wird.

8. Verfahren gemäss Anspruch 6 oder 7, dadurch **gekennzeichnet**, dass man nach dem Rührvorgang das Gemisch ca. 15 min. absitzen lässt.

9. Verfahren gemäss Anspruch 1, dadurch **gekennzeichnet**, dass im Schritt (c) als Erdalkalisalz ein Magnesium-oder Calciumsalz zugegeben wird.

10. Verfahren gemäss Anspruch 1, dadurch **gekennzeichnet**, dass das Filtrat gemäss Schritt - (d) der öligen Phase von Schritt (a) zur weiteren Auftrennung zugegeben wird.

11. Verfahren gemäss Anspruch 10, dadurch **gekennzeichnet**, dass die Rezyklisierung ein-bis dreimal, entsprechend den Rezyklisierungsstufen 2 bis 4, wiederholt wird.

12. Verfahren gemäss Anspruch 11, dadurch **gekennzeichnet**, dass in den Rezyklisierungsstufen 2 bis 4 der pH-Wert des Filtrates jeweils auf 8,5, 8,0 und 7,5 eingestellt wird.

13. Verfahren gemäss Anspruch 12, dadurch **gekennzeichnet**, dass die Einstellung des pH-Wertes durch Zugabe von $K_2CO_3$ erfolgt.

14. Verfahren gemäss Anspruch 11, dadurch **gekennzeichnet** , dass in der Rezyklisierungstufe 2 die Rührzeit 5 min., in den Rezyklisierungsstufen 3 und 4 die Rührzeit jeweils 30 min. beträgt.

15. Verfahren gemäss Anspruch 11, dadurch **gekennzeichnet**, dass in den Rezyklisierungsstufen 2 bis 4 die Temperatur jeweils 55, 50 und 50°C beträgt.

16. Verfahren gemäss Anspruch 1, dadurch **gekennzeichnet**, dass die Isomerisierungsreaktion gemäss Schicht (e) bei einer Feuchte von 95% und einer Temperatur von 105°C durchgeführt wird.

17. Verfahren gemäss Anspruch 1 und 16, dadurch **gekennzeichnet**, das die Erdalkalihumulate von Schritt (e) als Masse von pastöser bzw. hochviskoser Konsistenz vorliegen.

18. Verfahren gemäss Anspruch 17, dadurch **gekennzeichnet**, dass die Humulate zur Isomerisierungsreaktion in einer dünnen Schicht vorzugsweise auf ein V2A-Blech aufgetragen werden.

19. Verfahren gemäss Anspruch 1, 16, 17 und 18, dadurch **gekennzeichnet**, dass die Isomerisierungsreaktion unter Einwirkung von Mikrowellen durchgeführt wird.

20. Verfahren gemäss Anspruch 1, dadurch **gekennzeichnet** , dass zur Umwandlung der Erdalkali-Isohumulate in die entsprechenden freien Isohumulone gemäss Schritt (f) eine 10%ige Erdalkalihumulat-Lösung in Ethanol hergestellt und diese durch Ansäuern mit vorzugsweise Oxalsäure, HCl oder $CO_2$ auf pH 4 gebracht wird.

21. Verfahren gemäss Anspruch 20 , dadurch **gekennzeichnet**, dass zum Erhalt der freien Isohumulone eine Umkehrosmose durchgeführt wird.

22. Verfahren gemäss Anspruch 1, dadurch **gekennzeichnet**, das die Umwandlung der Erdalkali-Isohumulate in die entsprechenden freien Isohumulone gemäss Schritt (f) mit Hilfe eines stark sauren Kationenaustauschharzes erfolgt.

23. Verwendung der in Schritt (f) von Anspruch 1 erhaltenen freien Isohumulone zum Bittern von Bier oder der Würze

24. Verwendung nach Anspruch 23 zusammen mit Lösungsvermittlern, vorzugsweise Ethanol, Glucose, Isoglucose, Fructose, Kornsirupsolids, Dextrine oder Gemische derselben.

Europäisches Patentamt

# EUROPÄISCHER RECHERCHENBERICHT

Nummer der Anmeldung

EP 86 10 3858

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| --- | --- | --- | --- |
| | | | C 12 C 9/02 |
| A | FR-A-2 367 822 (BREWING PATENTS LTD.) * Ansprüche 1,3 * --- | 1-4 | |
| A | FR-A-2 107 336 (CARLTON AND UNITED BREWERIES LTD.) * Ansprüche 1,2,4 * --- | 1,9,16 ,17 | |
| A | EP-A-0 019 462 (CARLTON AND UNITED BREWERIES LTD.) --- | | |
| A | FR-A-2 398 799 (ALBRIGHT & WILSON LTD.) --- | | |
| P,A | EP-A-0 173 479 (PAUL HOPS LTD.) * Ansprüche 1,2,5,10,12; Seite 5, Zeile 30 - Seite 6, Zeile 16; Beispiele 1,6 * ----- | 1-4 | |
| | | | RECHERCHIERTE SACHGEBIETE (Int. Cl.4) |
| | | | C 12 C |

Der vorliegende Recherchenbericht wurde für alle Patentansprüche erstellt.

| Recherchenort | Abschlußdatum der Recherche | Prüfer |
| --- | --- | --- |
| DEN HAAG | 20-06-1986 | COUCKE A.O.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument